# EUROPEAN PATENT SPECIFICATION

(11) **EP 2 902 967 B1**
(45) Date of publication and mention of the grant of the patent: **20.03.2019**
(21) Application number: 15151733.1
(22) Date of filing: 20.01.2015
(51) Int. Cl.: H04N 13/20, G06T 7/80

(54) **Stereo camera calibration method, disparity calculating device, and stereo camera**
Stereokamerakalibrierungsverfahren, Disparitätsberechnungsvorrichtung und Stereokamera
Procédé d'étalonnage de caméra stéréo, dispositif de calcul de disparité et caméra stéréo

(30) Priority: 31.01.2014 JP 2014017620; 28.11.2014 JP 2014242121
(43) Date of publication of application: 05.08.2015
(60) Divisional application: 19155663.8
(73) Proprietor: Ricoh Company, Ltd., Tokyo 143-8555 (JP)
(72) Inventor: Kishiwada, Jun, Tokyo, 143-8555 (JP); Aoki, Shin, Tokyo, 143-8555 (JP); Kikuchi, Naoki, Tokyo, 143-8555 (JP); Nagao, Kagehiro, Tokyo, 143-8555 (JP)
(74) Representative: SSM Sandmair

(56) References cited:
- JP-A- 2004 354 256
- JP-A- 2013 195 783
- US-B2- 7 438 774
- STEVEN S BEAUCHEMIN ET AL: "Portable and Scalable Vision-Based Vehicular Instrumentation for the Analysis of Driver Intentionality", IEEE TRANSACTIONS ON INSTRUMENTATION AND MEASUREMENT, IEEE SERVICE CENTER, PISCATAWAY, NJ, US, vol. 61, no. 2, 1 February 2012 (2012-02-01), pages 391-401, XP011391169, ISSN: 0018-9456, DOI: 10.1109/TIM.2011.2164854
- HEIKKILA J ET AL: "A four-step camera calibration procedure with implicit image correction", COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17 June 1997 (1997-06-17), pages 1106-1112, XP010237491, DOI: 10.1109/CVPR.1997.609468 ISBN: 978-0-8186-7822-6

## Description

### BACKGROUND OF THE INVENTION

### 1. Field of the Invention

The present invention relates to a stereo camera calibration method, a disparity calculating device, and a stereo camera.

### 2. Description of the Related Art

Widely known are stereo cameras that can measure a distance to a subject. There have been developed technologies to control a car by measuring a distance to a subject ahead of the car with a stereo camera mounted on the car (hereinafter referred to as an "onboard stereo camera"), for example. The distance measured by the onboard stereo camera is used to issue a warning to a driver and control braking, steering, or the like so as to prevent collision of the car and keep the distance from the car ahead, for example.

Typical onboard stereo cameras are usually arranged behind a windshield of a car. This is because, to arrange an onboard stereo camera outside a car, the stereo camera needs to have higher durability in terms of waterproof, dustproof, and other properties. A stereo camera arranged inside a car captures a view outside the car through the windshield. Typically, windshields have a complex curved shape and have a distortion in the shape compared with an optical component, such as a lens in a camera. As a result, windshields cause a distortion in an image obtained by capturing through the windshields.

There have conventionally been developed technologies to correct a captured image obtained by a stereo camera. Japanese Patent No. 4109077, for example, discloses a device that regulates an optical distortion and a positional shift in a stereoscopic camera by image processing by converting a pair of pieces of image data output from a pair of cameras constituting the stereoscopic camera with a calibration parameter based on deviation in the coordinates between one of the pieces of image data and the other.

The conventional technologies can calibrate deviation in disparity (a relative position) (hereinafter referred to as "relative positional deviation") of an image of a subject between a pair of pieces of image data into correct disparity. The conventional technologies, however, cannot calibrate deviation in the coordinates (hereinafter referred to as "absolute positional deviation") of the image of the subject on the image data into correct coordinates. If three-dimensional coordinates indicating the position of the subject are calculated based on the distance to the subject calculated by the disparity of the image of the subject and on the coordinates of the image of the subject on the image data, an error may possibly occur in the three-dimensional coordinates.

In view of the disadvantage described above, there is a need to provide a stereo camera calibration method, a disparity calculating device, and a stereo camera that can calibrate not only relative positional deviation on image data but also absolute positional deviation on the image data.

STEVEN BEAUCHEMIN ET AL: "Portable and Scalable Vision-Based Vehicular Instrumentation for the Analysis of Driver Intentionality", IEEE TRANSACTIONS ON INSTRUMENTATION AND MEASUREMENT, IEEE SERVICE CENTER, PISCATAWAY, NJ, US, vol. 61, no. 2, 1 February 2012 (2012-02-01), pages 391-401, XP011391169, ISSN: 0018-9456, DOI: 10.1109/TIM.2011.2164854 discloses a stereo camera calibration method for calibrating a stereo camera in which a correction parameter used to calibrate relative positional deviation indicating deviation and disparity is determined as a depth map.

JP 2013-195783 A discloses a positional deviation detecting system for a vehicle-mounted camera in which a position deviation value generated by the presence of a windshield is calculated for consideration during calibration.

### SUMMARY OF THE INVENTION

It is an aim of the present invention to at least partially solve the problems in the conventional technology.

The scope of the invention is defined by the appended claims. Any reference to "embodiment(s)", "example(s)" or "aspect(s) of the invention" in this description not falling under the scope of the claims should be interpreted as illustrative example(s) for understanding the invention.

### BRIEF DESCRIPTION OF THE DRAWINGS

FIG. 1 is a diagram for explaining a principle of measurement of a distance with a stereo camera;
FIG. 2A is a diagram of an ideal detection position of an image of a subject;
FIG. 2B is a diagram of deviation in the detection position of the image of the subject;
FIG. 3A is a diagram of an ideal state of the image of the subject and disparity;
FIG. 3B is a diagram of absolute positional deviation of the image of the subject due to an influence of light refraction caused by a windshield;
FIG. 3C is a diagram of a case where the disparity is calculated based on the position of the image in the reference image in FIG. 3B;
FIG. 3D is a diagram of a case where the comparison image is calibrated such that the disparity is identical to ideal disparity d;
FIG. 3E is a diagram of a case where the absolute positional deviation in the position of the image of the subject fails to be calibrated;
FIG. 4 is an exemplary diagram of an environment for implementing a stereo camera calibration method according to a first embodiment of the present invention;
FIG. 5 is an entire schematic flowchart of the calibration method according to the first embodiment;
FIG. 6 is an exemplary flowchart of the stereo camera calibration method according to the first embodiment;
FIG. 7 is an exemplary diagram of a simulation environment to calculate a first correction
   parameter according to the first embodiment;
FIG. 8 is an exemplary diagram of distribution of deviation in the coordinates (absolute positional deviation) indicating the position of the image on a sensor;
FIG. 9 is an exemplary diagram of distribution of deviation in longitudinal components of disparity (relative positional deviation) obtained when the disparity is calculated with the distribution of the deviation in the coordinates (absolute positional deviation) in the state of FIG. 8;
FIG. 10 is an exemplary diagram of a configuration of a disparity calculating device according to a second embodiment of the present invention;
FIG. 11 is an exemplary flowchart of a disparity calculation method according to the second embodiment;
FIG. 12 is an exemplary configuration of a stereo camera according to a third embodiment of the present invention;
FIG. 13 is an exemplary diagram of a case where the stereo camera according to the third embodiment is used as an onboard stereo camera; and
FIG. 14 is an exemplary diagram of a hardware configuration of the disparity calculating device according to the second and the third embodiments.

### DETAILED DESCRIPTION OF THE PREFERRED EMBODIMENTS

Exemplary embodiments of a stereo camera calibration method, a disparity calculating device, and a stereo camera according to the present invention are described below in greater detail with reference to the accompanying drawings.

### First embodiment

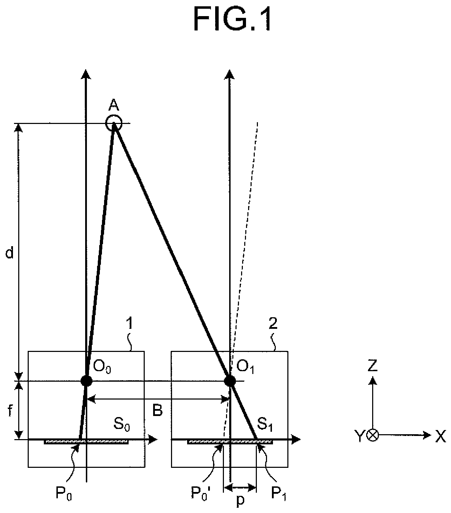

The following describes disparity and a principle of measurement of a distance using the disparity. The disparity is calculated using a captured image obtained by a stereo camera. FIG. 1 is a diagram for explaining the principle of measurement of a distance with a stereo camera. In the example in FIG. 1, a first camera 1 (a focal length f, an optical center O₀, a capturing surface S₀) is arranged with the optical axis direction extending along the Z-axis. A second camera 2 (a focal length f, an optical center O₁, a capturing surface S₁) is arranged with the optical axis direction extending along the Z-axis. The first camera 1 and the second camera 2 are arranged side by side parallel to the X-axis in a manner separated from each other by a distance B (base line length).

A subject A is positioned away from the optical center O₀ of the first camera 1 in the optical axis direction by a distance d. An image of the subject A is produced on P₀ serving as the point of intersection of the line A-O₀ with the capturing surface S₀. In the second camera, an image of the subject A is produced on P₁ on the capturing surface S₁. The captured image obtained from the image capturing surface S₀ is hereinafter referred to as a "first captured image", whereas the captured image obtained from the image capturing surface S₁ is referred to as a "second captured image".

P₀' denotes the point of intersection of a line through the optical center O₁ of the second camera 2 and parallel to the line A-O₀ with the capturing surface S₁, and p denotes the distance between P₀' and P₁. The distance p indicates an amount of deviation (disparity) in the position between the images obtained by capturing the single subject with the two cameras. Because the triangle A-O₀-O₁ is similar to the triangle O₁-P₀'-P₁, d=B×f/p is satisfied. In other words, the distance d to the subject A can be calculated from the base line length B, the focal length f, and the disparity p.

The mechanism described above is the principle of measurement of a distance with a stereo camera. In the case of using a stereo camera that captures a subject through a transparent member (e.g., an onboard stereo camera that captures a subject through a windshield), the influence of the transparent member causes deviation in the position (the absolute positional deviation described above) of the image of the subject on the captured image.

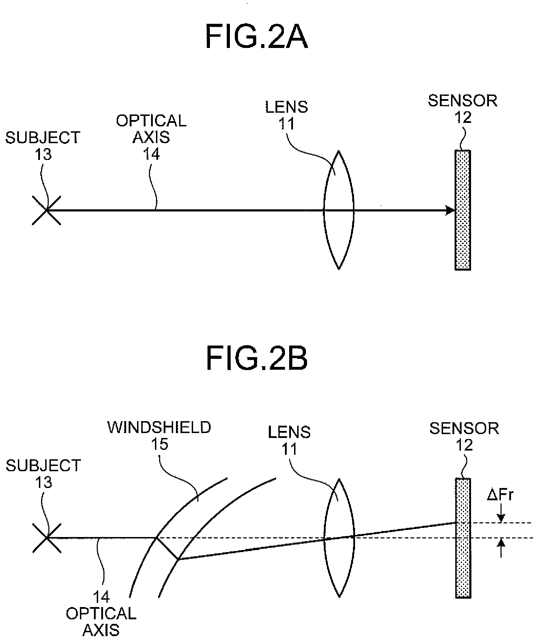

FIG. 2A is a diagram of an ideal detection position of an image of a subject. In FIG. 2A, a lens 11 (an optical system) is a pinhole camera for the convenience of explanation. In a case where a subject 13 is positioned on the optical axis of the lens 11, a ray of light travels in the same direction as that of an optical axis 14 and reaches a sensor 12 without any change. In other words, the image of the subject 13 is detected at the position corresponding to the position of the optical axis.

FIG. 2B is a diagram of deviation in the detection position of the image of the subject. In FIG. 2B, a windshield 15 is arranged in front of the lens 11 illustrated in FIG. 2A. The ray of light output from the subject 13 is refracted by the front and rear surfaces of the windshield 15 and eventually reaches the sensor 12 in a manner deviated from the image position where the ray of light reaches the sensor 12 without the windshield 15 (refer to FIG. 2A) by ΔFr. In other words, the image of the subject 13 is detected in a manner deviated from the position corresponding to the position of the optical axis by ΔFr.

Deviation ΔFr is generated in each of the cameras of the stereo camera. Let us assume that image data is calibrated based on ideal disparity (hereinafter referred to as "ideal disparity") and on disparity derived from a pair of pieces of image data obtained by the stereo camera. In this case, deviation in the disparity of the image of the subject can be calibrated into correct disparity, but deviation (ΔFr) in the coordinates of the image of the subject cannot be calibrated. The following describes this mechanism.

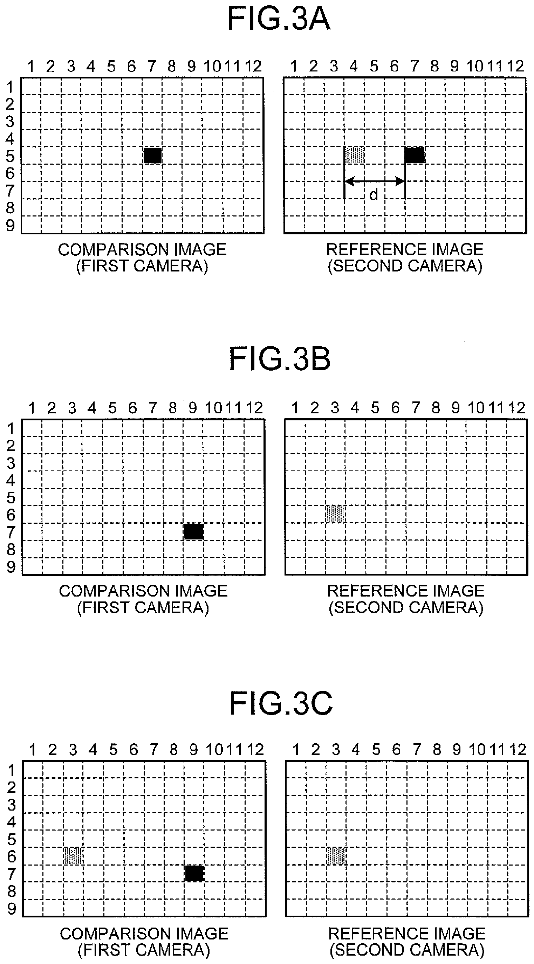

FIGS. 3A to 3E are diagrams for explaining the principle of calibration in which deviation in disparity (the relative positional deviation described above) of an image of a subject can be calibrated into correct disparity but deviation in the position (the absolute positional deviation described above) of the image of the subject cannot be calibrated into the correct position. The comparison images in FIGS. 3A to 3E are the first captured images obtained by the first camera 1. The reference images in FIGS. 3A to 3E are the second captured images obtained by the second camera 2.

FIG. 3A is a diagram of an ideal state of the image of the subject and the disparity. The position of the image of the subject in the comparison image is (5,7), whereas the position of the image of the subject in the reference image is (5,4). In other words, ideal disparity d is 3.

FIG. 3B is a diagram of absolute positional deviation of the image of the subject due to an influence of light refraction caused by the windshield 15. The image of the subject in the comparison image is positioned at (7,9). In other words, the amount of deviation from the ideal state is 2 in the vertical direction and 2 in the horizontal direction. By contrast, the image of the subject in the reference image is positioned at (6,3). In other words, the amount of deviation from the ideal state is 1 in the vertical direction and 1 in the horizontal direction.

FIG. 3C is a diagram of a case where the disparity is calculated based on the position of the image in the reference image in FIG. 3B. In the comparison image, an image serving as a reference is positioned at (6,3), which is the same position as that of the image in the reference image. In the state illustrated in FIG. 3C, the disparity is 1 in the vertical direction and 6 in the horizontal direction. In other words, the influence of the absolute positional deviation of the image of the subject causes deviation (relative positional deviation) from the ideal disparity of 1 in the vertical direction and 4 in the horizontal direction.

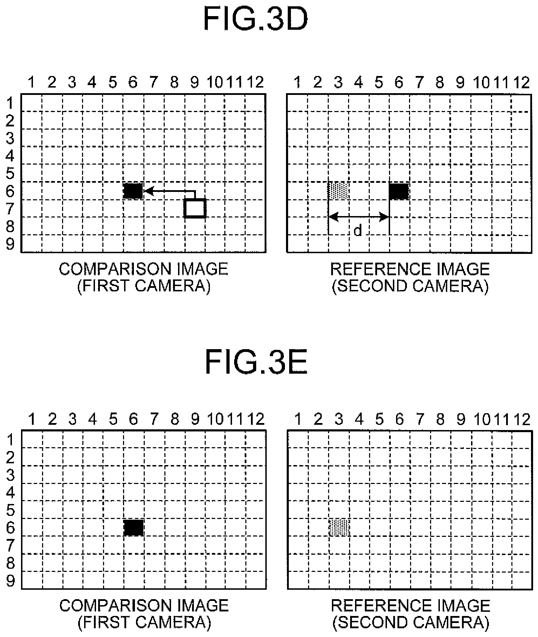

FIG. 3D is a diagram of a case where the comparison image is calibrated such that the disparity is identical to the ideal disparity d. By using a calibration chart separated by a known distance as an object to be captured by the stereo camera, the ideal disparity d can be calculated. The conventional stereo camera calibration method calibrates the position of the image in the comparison image such that the disparity is 3 (ideal disparity d) using the position (6,3) of the image in the reference image as a reference. Both the comparison image and the reference image include the calibration chart separated by the known distance as a subject. In other words, the conventional stereo camera calibration method calibrates the comparison image such that the position of the image in the comparison image is shifted from (7,9) to (6,6). With this calibration, the ideal disparity d can be calculated from the comparison image and the reference image.

FIG. 3E is a diagram of a case where the absolute positional deviation in the position of the image of the subject fails to be calibrated. The position (6,6) of the image in the comparison image remains deviated from the position (5,7) in the ideal state by 1 in the vertical direction and 1 in the horizontal direction. The position (6,3) of the image in the reference image also remains deviated from the position (5,4) in the ideal state by 1 in the vertical direction and 1 in the horizontal direction. As described above, if the image data is calibrated such that the disparity is identical to the ideal disparity d using the pair of pieces of image data, the position of the image of the subject cannot be calibrated into the correct position.

The stereo camera calibration method according to the present embodiment can substantially calibrate the position of the image of the subject into the position in the ideal state. The following describes this mechanism.

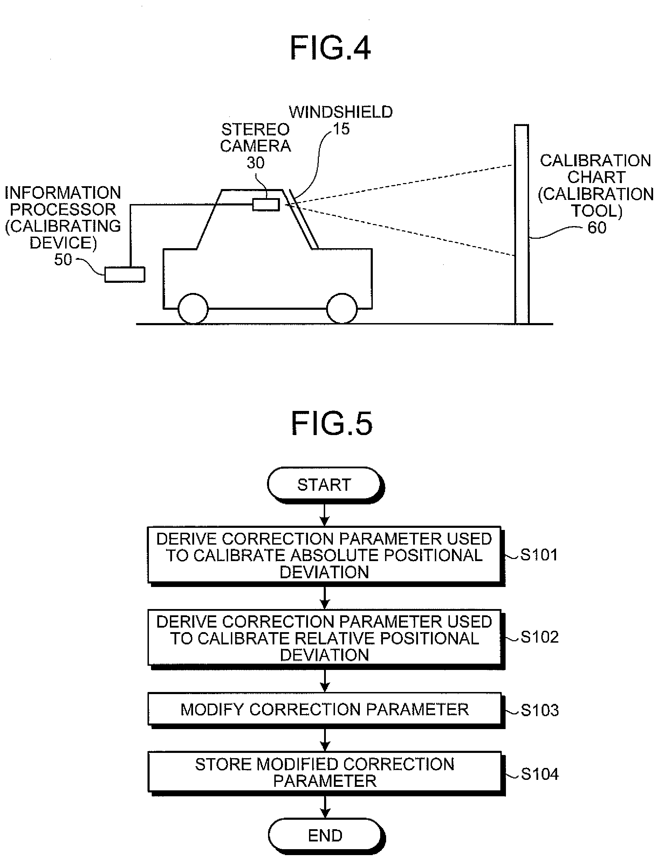

FIG. 4 is an exemplary diagram of an environment for implementing the stereo camera calibration method according to a first embodiment of the present invention. FIG. 4 illustrates an example where a stereo camera 30 attached behind the windshield 15 of the car is calibrated. A calibration chart 60 (a calibration tool) is arranged within a capturing range of the stereo camera 30. The calibration chart 60 is arranged in a manner separated from the stereo camera 30 by approximately 2 m and substantially facing the stereo camera 30, for example. The calibration chart 60 has a density pattern or the like that facilitates detection of a corresponding point on the second captured image (reference image) corresponding to a point on the first captured image (comparison image). The first captured image (second captured image) includes the calibration chart 60 captured by the stereo camera 30 as a subject and is used to determine a parameter for calibration of the stereo camera 30. The first captured image (second captured image) is received by an information processor 50 serving as a calibrating device. The information processor 50 then determines a parameter used to calibrate the stereo camera 30.

FIG. 5 is an entire schematic flowchart of the calibration method according to the first embodiment. The information processor 50 derives a correction parameter used to calibrate absolute positional deviation (Step S101). Specifically, the information processor 50 derives a first correction parameter and a second correction parameter. The first correction parameter, which will be described later, is used to calibrate absolute positional deviation in the first captured image (comparison image) obtained by the first camera 1. The second correction parameter, which will be described later, is used to calibrate absolute positional deviation in the second captured image (reference image) obtained by the second camera 2.

The information processor 50 then derives a correction parameter used to calibrate relative positional deviation (Step S102). Specifically, the information processor 50 derives a third correction parameter based on a difference between the coordinates of the image of the subject in the first captured image calibrated with the first correction parameter, which will be described later, and the coordinates of the image of the subject in the second captured image calibrated with the second correction parameter, which will be described later, and on the ideal disparity d. The third correction parameter, which will be described later, is used to calibrate relative positional deviation indicating deviation in the disparity between the image of the subject in the calibrated first captured image and that of the subject in the calibrated second captured image.

The information processor 50 then modifies one of the correction parameters (Step S103). Specifically, the information processor 50 modifies the first correction parameter, which will be described later, used to calibrate the absolute positional deviation in the first captured image or the second correction parameter, which will be described later, used to calibrate the absolute positional deviation in the second captured image with the third correction parameter, which will be described later, used to calibrate the relative positional deviation.

The stereo camera 30 then stores therein the modified correction parameter (Step S104). Specifically, the stereo camera 30 stores therein the first correction parameter, which will be described later, modified with the third correction parameter as the correction parameter used to calibrate the first captured image and the second correction parameter, which will be described later, as the parameter used to calibrate the second captured image, for example.

The calibration method according to the first embodiment will be described in greater detail.

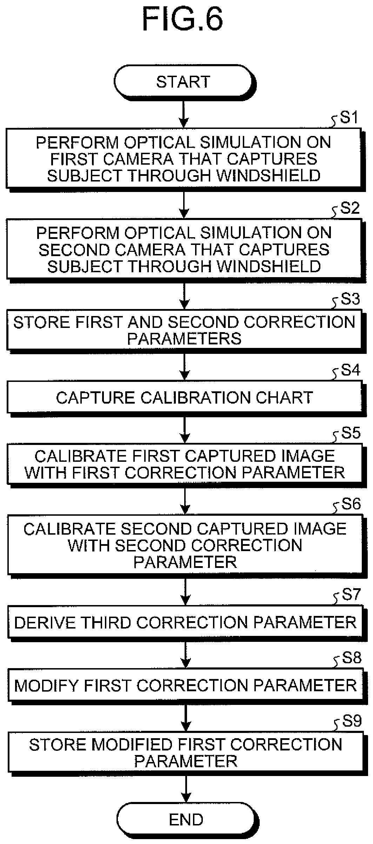

FIG. 6 is an exemplary flowchart of the stereo camera calibration method according to the first embodiment. The information processor 50 performs optical simulation on the first camera 1 (Step S1). By performing the optical simulation at Step S1, the information processor 50 derives the first correction parameter used to calibrate absolute positional deviation in the position of the image of the subject on the first captured image caused by refraction of light passing through the windshield 15. The information processor 50 is a computer on which optical simulation software is installed, for example. The optical simulation is performed using a numerical analysis method, such as the finite element method.

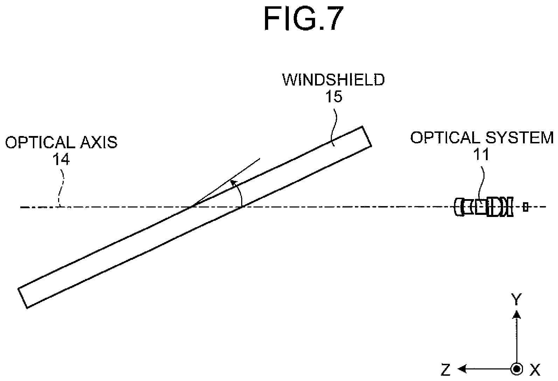

FIG. 7 is an exemplary diagram of a simulation environment to calculate the first correction parameter according to the first embodiment. The windshield 15 is arranged in front of an optical system 11. The characteristics of the windshield 15 are indicated by the radius of curvature of the front and rear surfaces, the thickness, the refractive index, and the Abbe number of the windshield 15, for example. The radius of curvature indicates the degree of curvature of the windshield 15. The thickness indicates the thickness of the windshield 15. The refractive index indicates a traveling manner of light passing through the windshield 15. The Abbe number is an index for evaluating dispersion of light passing through the windshield 15. The windshield 15 with a larger Abbe number less disperses the light. The windshield 15 is inclined with respect to the optical axis 14 by a predetermined angle. In the simulation environment, the deviation (absolute positional deviation) of the image of the subject on the first captured image is measured using the setting of the characteristics of the optical system 11 (lens) in the first camera 1.

The characteristics of the optical system 11 are indicated by a plane number, the radius of curvature, the thickness, the refractive index, and the Abbe number, for example. The plane number indicates the position of the lens arranged in the optical system 11. The plane number is assigned in ascending order from the subject side to the image side. The position of the diaphragm in the optical system 11 is specified by a predetermined plane number. The radius of curvature indicates the degree of curvature of the lens. The thickness indicates the thickness of the lens. The refractive index indicates a traveling manner of light passing through the lens. The Abbe number is an index for evaluating dispersion of light passing through the lens. The lens with a larger Abbe number less disperses the light.

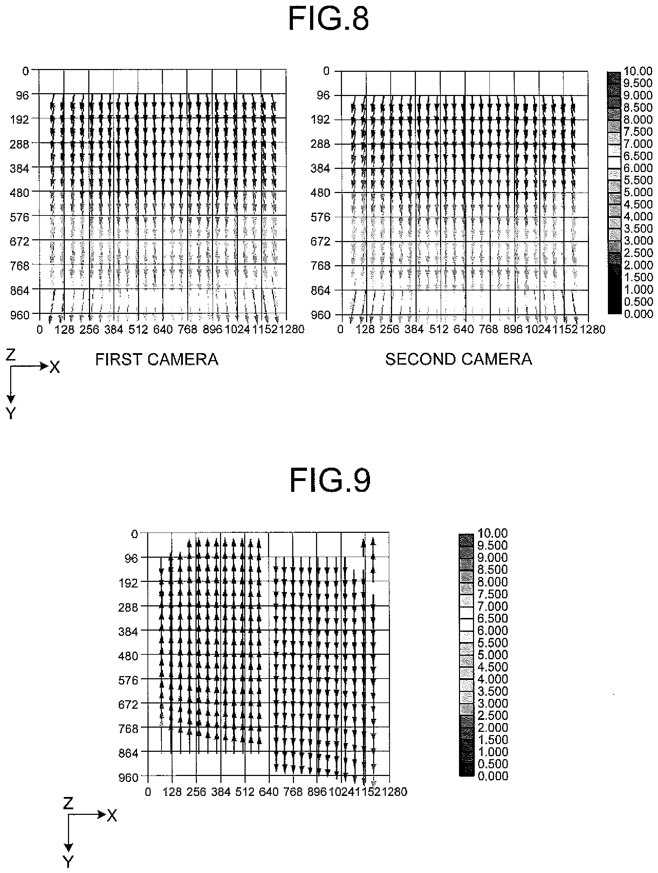

The following describes an example of the simulation result with reference to FIGS. 8 and 9. FIG. 8 is an exemplary diagram of distribution of the deviation in the coordinates (absolute positional deviation) indicating the position of the image on the sensor 12. In other words, the roots of the vectors in FIG. 8 each indicate the position of the image without the windshield 15, whereas the points of the vectors each indicate the position of the image with the windshield 15. The lengths of the vectors in FIG. 8 each indicate the magnitude of deviation in the coordinates (absolute positional deviation) indicating the position of the image. The longest vector in the scale of the vectors in FIG. 8 corresponds to absolute positional deviation of approximately 10 pix. The sensor 12 has a size of 2.4 mm in the horizontal direction and 1.8 mm in the vertical direction and a pitch of 0.00375 mm.

As illustrated in FIG. 8, the positions of the images are collectively deviated downward by the windshield 15. The magnitude of the absolute positional deviation in the position of the image increases in the lower part of the sensor 12, and the largest absolute positional deviation is approximately 10 pix.

FIG. 9 is an exemplary diagram of distribution of deviation in longitudinal components of disparity (relative positional deviation) obtained when the disparity is calculated with the distribution of the deviation in the coordinates (absolute positional deviation) in the state of FIG. 8. The lengths of the vectors in FIG. 9 each indicate the magnitude of deviation in disparity (relative positional deviation) in the coordinates of the root of the vector. The longest vector in the scale of the vectors in FIG. 9 corresponds to relative positional deviation of approximately 0.3 pix.

As illustrated in FIGS. 8 and 9, the largest positional deviation (absolute positional deviation) of the image caused by the windshield 15 is approximately 10 pix (refer to FIG. 8), whereas the largest deviation in the longitudinal components of the disparity (relative positional deviation) is equal to or smaller than 0.3 pix (refer to FIG. 9). If the image data is calibrated by the method described with reference to FIGS. 3A to 3E, the absolute positional deviation in the position of the subject cannot be corrected. As a result, the largest absolute positional deviation of the image of the subject is approximately 10 pix (refer to FIG. 8). If the position of the image of the subject is deviated by approximately 10 pix, an error of equal to or larger than 10 cm occurs in calculation of the three-dimensional coordinates of an object positioned 20 m ahead.

Referring back to FIG. 6, the information processor 50 then performs optical simulation on the second camera 2 (Step S2). Specifically, in a case where the setting of the optical system in the first camera 1 is the same as that of the optical system in the second camera 2, the information processor 50 performs the same optical simulation as that performed at Step S1 on the conditions corresponding to the positional relation between the windshield 15 and the second camera 2 of the stereo camera 30. By performing the optical simulation at Step S2, the information processor 50 derives the second correction parameter used to calibrate absolute positional deviation in the position of the image of the subject on the second captured image caused by refraction of light passing through the windshield 15.

The stereo camera 30 then stores therein the first correction parameter and the second correction parameter (Step S3). The stereo camera 30 then captures the calibration chart 60 separated by the known distance as a subject to obtain the first captured image and the second captured image (Step S4). The calibration chart 60 has a density pattern or the like that facilitates detection of a corresponding point on the second captured image (reference image) corresponding to a point on the first captured image (comparison image). The stereo camera 30 then calibrates the first captured image with the first correction parameter (Step S5). The stereo camera 30 then calibrates the second captured image with the second correction parameter (Step S6).

The information processor 50 then derives the third correction parameter used to calibrate relative positional deviation indicating deviation in the disparity between the image of the subject in the calibrated first captured image and that of the subject in the calibrated second captured image based on a difference between the coordinates of the image of the subject in the calibrated first captured image and those of the image of the subject in the calibrated second captured image and on the ideal disparity d (Step S7). The information processor 50 then modifies the first correction parameter with the third correction parameter, thereby deriving a modified first correction parameter (Step S8). The stereo camera 30 then stores therein the modified first correction parameter (Step S9).

As described above, in the stereo camera calibration method according to the first embodiment, the information processor 50 performs the optical simulation on the first camera 1 and the second camera 2 that capture a subject through a transparent member, thereby deriving the first correction parameter and the second correction parameter. The information processor 50 then derives the third correction parameter from the first captured image calibrated with the first correction parameter and the second captured image calibrated with the second correction parameter. The information processor 50 then modifies the first correction parameter with the third correction parameter, thereby deriving the modified first correction parameter. Thus, the stereo camera calibration method according to the first embodiment can derive the correction parameters (the modified first correction parameter and the second correction parameter). The use of the correction parameters makes it possible to calibrate not only the deviation in the disparity (relative positional deviation) of the image of the subject on the image data but also the deviation in the coordinates (absolute positional deviation) of the image of the subject on the image data.

The stereo camera calibration method according to the first embodiment can be performed to calibrate the stereo camera 30 before shipment or at periodic inspections, for example. While the information processor 50 in the description above modifies the first correction parameter with the third correction parameter, the information processor 50 may modify the second correction parameter with the third correction parameter. The third correction parameter may be stored in a storage unit 24 independently of the first and the second correction parameters. In the description below, the correction parameters based on the first and the second correction parameters and the third correction parameter include the correction parameter obtained by modifying at least one of the first and the second correction parameters with the third correction parameter, the first and the second correction parameters, and the third correction parameter.

### Second embodiment

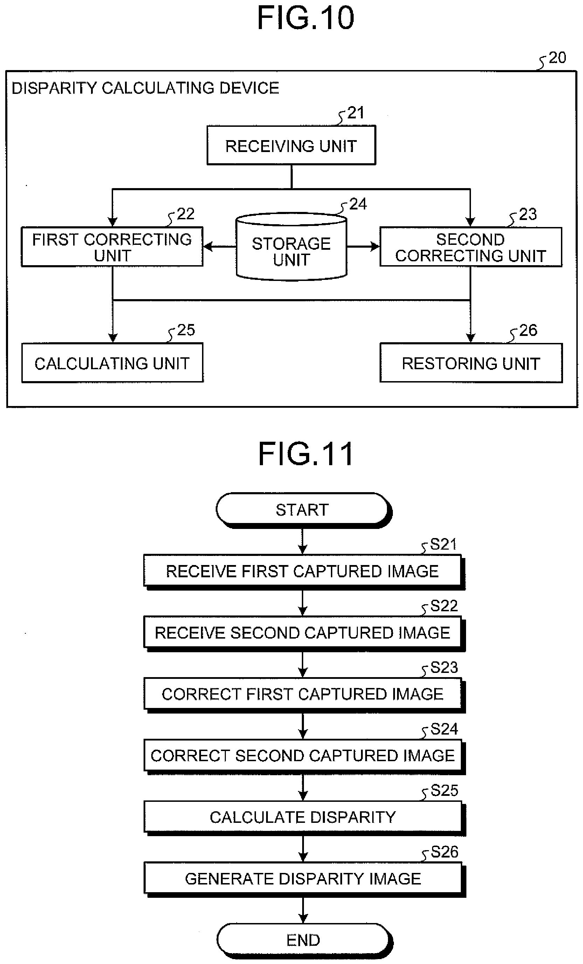

A disparity calculating device according to a second embodiment of the present invention will be described. The disparity calculating device according to the second embodiment uses the correction parameter derived by the stereo camera calibration method described above. In a case where the disparity calculating device in operation uses the correction parameter, "calibration" is expressed as "correction". FIG. 10 is an exemplary diagram of a configuration of a disparity calculating device 20 according to the second embodiment. The disparity calculating device 20 according to the second embodiment includes a receiving unit 21, a first correcting unit 22, a second correcting unit 23, a storage unit 24, a calculating unit 25, and a restoring unit 26.

The receiving unit 21 receives input of the first captured image. The receiving unit 21 outputs the first captured image to the first correcting unit 22. The receiving unit 21 also receives input of the second captured image. The receiving unit 21 outputs the second captured image to the second correcting unit 23.

The first correcting unit 22 receives the first captured image from the receiving unit 21. The first correcting unit 22 corrects the first captured image with the modified first correction parameter described above. The first correcting unit 22 outputs the corrected first captured image to the calculating unit 25 and the restoring unit 26.

The second correcting unit 23 receives the second captured image from the receiving unit 21. The second correcting unit 23 corrects the second captured image with the second correction parameter described above. The second correcting unit 23 outputs the corrected second captured image to the calculating unit 25 and the restoring unit 26.

The storage unit 24 stores therein the modified first correction parameter used by the first correcting unit 22 and the second correction parameter used by the second correcting unit 23.

The calculating unit 25 receives the corrected first captured image from the first correcting unit 22 and receives the corrected second captured image from the second correcting unit 23. The calculating unit 25 calculates the disparity from the image of the subject included in the corrected first captured image and that of the subject included in the corrected second captured image. The calculating unit 25 calculates the disparity of each pixel to generate a disparity image representing the disparity with a density value.

The restoring unit 26 receives the corrected first captured image from the first correcting unit 22 and receives the corrected second captured image from the second correcting unit 23. The restoring unit 26 restores modulation transfer function (MTF) characteristics of the first captured image deteriorated by the correction. By restoring the MTF characteristics of the first captured image, the restoring unit 26 generates a first luminance image having improved resolution. Similarly, the restoring unit 26 restores the MTF characteristics of the second captured image deteriorated by the correction. By restoring the MTF characteristics of the second captured image, the restoring unit 26 generates a second luminance image having improved resolution.

The disparity calculation method according to the second embodiment will be described with reference to a flowchart. FIG. 11 is an exemplary flowchart of the disparity calculation method according to the second embodiment. The receiving unit 21 receives input of the first captured image (Step S21). The receiving unit 21 then receives input of the second captured image (Step S22).

The first correcting unit 22 then corrects the first captured image with the modified first correction parameter (Step S23). The second correcting unit 23 then corrects the second captured image with the second correction parameter (Step S24).

The calculating unit 25 then calculates the disparity from the image of the subject included in the corrected first captured image and that of the subject included in the corrected second captured image (Step S25). The calculating unit 25 uses the disparity calculated at Step S25 (disparity calculated for each pixel) to generate a disparity image representing the disparity with a density value of a pixel (Step S26).

As described above, the first correcting unit 22 in the disparity calculating device 20 according to the second embodiment corrects the first captured image with the modified first correction parameter. The second correcting unit 23 corrects the second captured image with the second correction parameter. The calculating unit 25 calculates the disparity from the image of the subject included in the corrected first captured image and that of the subject included in the corrected second captured image.

Thus, the disparity calculating device 20 according to the second embodiment can correct not only the deviation in the disparity (relative positional deviation) of the image of the subject on the image data but also the deviation in the coordinates (absolute positional deviation) of the image of the subject on the image data. In other words, the disparity calculating device 20 according to the second embodiment can accurately calculate the three-dimensional coordinates indicating the position of the subject based on the distance to the subject calculated by the disparity of the image of the subject and on the coordinates of the image of the subject on the image data.

### Third embodiment

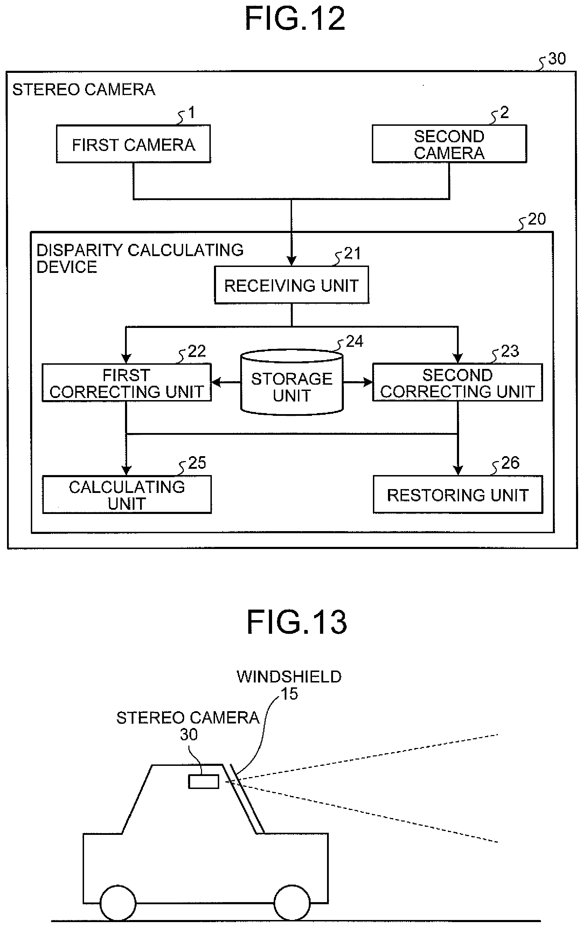

A third embodiment of the present invention will be described. FIG. 12 is an exemplary configuration of the stereo camera 30 according to the third embodiment. The stereo camera 30 according to the third embodiment includes the first camera 1, the second camera 2, and the disparity calculating device 20. The disparity calculating device 20 includes the receiving unit 21, the first correcting unit 22, the second correcting unit 23, the storage unit 24, the calculating unit 25, and the restoring unit 26.

The stereo camera 30 according to the third embodiment includes the disparity calculating device 20 according to the second embodiment. The stereo camera 30 according to the third embodiment may be used as an onboard stereo camera, for example. FIG. 13 is an exemplary diagram of a case where the stereo camera 30 according to the third embodiment is used as an onboard stereo camera. The stereo camera 30 is arranged behind the windshield 15. This configuration makes it possible to correct not only the deviation in the disparity (relative positional deviation) of the image of the subject on the image data but also the deviation in the coordinates (absolute positional deviation) of the image of the subject on the image data while the car (vehicle) is running and being stopped.

The stereo camera 30 according to the third embodiment can correct not only the deviation in the disparity (relative positional deviation) of the image of the subject on the image data but also the deviation in the coordinates (absolute positional deviation) of the image of the subject on the image data in real time. In other words, the stereo camera 30 according to the third embodiment can accurately calculate the three-dimensional coordinates indicating the position of the subject in real time based on the distance to the subject calculated by the disparity of the image of the subject and on the coordinates of the image of the subject on the image data.

### Modification of the third embodiment

A modification of the third embodiment will be described. The configuration of the stereo camera 30 according to the modification of the third embodiment is the same as that of the third embodiment (refer to FIG. 12). The receiving unit 21 receives input of the first captured image and first setting information indicating the setting of the lens (optical system) in the first camera 1 that obtains the first captured image. The receiving unit 21 transmits the first captured image and the first setting information to the first correcting unit 22. The receiving unit 21 also receives input of the second captured image and second setting information indicating the setting of the lens (optical system) in the second camera 2 that obtains the second captured image. The receiving unit 21 transmits the second captured image and the second setting information to the second correcting unit 23.

The first correcting unit 22 receives the first captured image and the first setting information from the receiving unit 21. The first correcting unit 22 refers to the first setting information to specify the setting of the lens in the first camera 1 that obtains the first captured image. The first correcting unit 22 corrects the first captured image with the modified first correction parameter corresponding to the specified setting of the lens. The first correcting unit 22 transmits the corrected first captured image to the calculating unit 25 and the restoring unit 26.

The second correcting unit 23 receives the second captured image and the second setting information from the receiving unit 21. The second correcting unit 23 refers to the second setting information to specify the setting of the lens in the second camera 2 that obtains the second captured image. The second correcting unit 23 corrects the second captured image with the second correction parameter corresponding to the specified setting of the lens. The second correcting unit 23 transmits the corrected second captured image to the calculating unit 25 and the restoring unit 26.

The storage unit 24 stores therein the modified first correction parameter varying with each setting of the lens in the first camera 1. The storage unit 24 also stores therein the second correction parameter varying with each setting of the lens in the second camera 2. Because the calculating unit 25 and the restoring unit 26 are the same as those of the third embodiment, explanation thereof will be omitted.

In a case where the setting (e.g., the number of lenses) of the optical system (lens) in the stereo camera 30 is changed, the modification of the third embodiment can correct not only the deviation in the disparity (relative positional deviation) of the image of the subject on the image data but also the deviation in the coordinates (absolute positional deviation) of the image of the subject on the image data in real time.

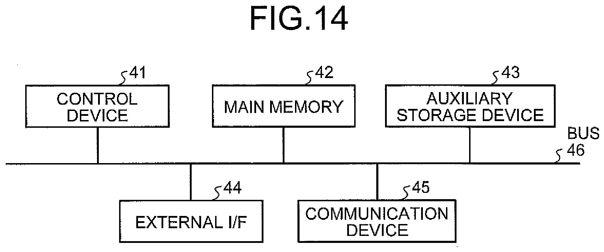

The following describes an example of the hardware configuration of the disparity calculating device 20 according to the second and the third embodiments. FIG. 14 is an exemplary diagram of the hardware configuration of the disparity calculating device 20 according to the second and the third embodiments. The disparity calculating device 20 according to the second and the third embodiments includes a control device 41, a main memory 42, an auxiliary storage device 43, an external interface (I/F) 44, and a communication device 45. The control device 41, the main memory 42, the auxiliary storage device 43, the external I/F 44, and the communication device 45 are connected to one another via a bus 46.

The control device 41 executes a computer program read on the main memory 42 from the auxiliary storage device 43. The control device 41 is a central processing unit (CPU). The main memory is a memory, such as a read only memory (ROM) and a random access memory (RAM). The auxiliary storage device 43 is a hard disk drive (HDD), a memory card, or the like. The external I/F 44 transmits and receives data to and from other devices. The communication device 45 communicates with other devices with a wireless system or the like.

The computer program executed by the disparity calculating device 20 according to the second and the third embodiments is recorded in a computer-readable storage medium, such as a compact disc read only memory (CD-ROM), a memory card, a compact disc recordable (CD-R), and a digital versatile disc (DVD), as an installable or executable file and is provided as a computer program product.

The computer program executed by the disparity calculating device 20 according to the second and the third embodiments may be stored in a computer connected to a network, such as the Internet, and provided by being downloaded via the network. Furthermore, the computer program executed by the disparity calculating device 20 according to the second and the third embodiments may be provided via a network, such as the Internet, without being downloaded.

The computer program executed by the disparity calculating device 20 according to the second and the third embodiments may be embedded and provided in a ROM, for example.

The computer program executed by the disparity calculating device 20 according to the second and the third embodiments has a module configuration including each of the functional blocks described above (the receiving unit 21, the first correcting unit 22, the second correcting unit 23, the calculating unit 25, and the restoring unit 26). In actual hardware, the control device 41 reads and executes the computer program from the storage medium to load each of the functional blocks on the main memory 42. Thus, each of the functional blocks is generated on the main memory 42.

A part or all of the units described above (the receiving unit 21, the first correcting unit 22, the second correcting unit 23, the calculating unit 25, and the restoring unit 26) may be provided not as software but as hardware, such as an integrated circuit (IC).

## Claims

1. A stereo camera calibration method for calibrating a stereo camera (30) including a first camera (1) and a second camera (2) and that captures a subject (13) through a transparent member (15), the stereo camera (30) calibration method comprising:
deriving a first correction parameter and a second correction parameter used to calibrate absolute positional deviation indicating deviation in coordinates of an image of the subject (13) due to the transparent member (15) in each of an image obtained by the first camera (1) and an image obtained by the second camera (2);
capturing a calibration tool (60) to obtain a first captured image with the first camera (1) and a second captured image with the second camera (2) and deriving a third correction parameter used to calibrate relative positional deviation indicating deviation in disparity between the image of the subject (13) in a calibrated first captured image and the image of the subject (13) in a calibrated second captured image based on a difference between the coordinates of the image of the subject in the calibrated first captured image and the coordinates of the image of the subject in the calibrated second captured image and on an ideal disparity corresponding to a distance from the stereo camera (30) to the calibration tool (60);
modifying at least one of the first correction parameter and the second correction parameter with the third correction parameter.

2. The stereo camera calibration method according to claim 1, wherein,
at the deriving of the first correction parameter used to calibrate the absolute positional deviation, the first correction parameter used to calibrate the absolute positional deviation in at least one of the image obtained by the first camera (1) and the image obtained by the second camera (2) is derived by performing optical simulation based on at least one of characteristics of a lens in the first camera (1) and characteristics of a lens in the second camera (2) and on characteristics of the transparent member.

3. The stereo camera calibration method according to claim 1, comprising:
storing, in the stereo camera (30), the third correction parameter independently of the first correcting parameter and the second correction parameter.

4. A disparity calculating device (20) comprising:
a storage unit (24) that stores therein a first correction parameter used to calibrate absolute positional deviation and a modified first correction parameter which has been derived using the method according to anyone of claims 1 to 2;
a correcting unit (22, 23) that corrects at least one of a first captured image obtained by a first camera (1) capturing a subject (13) through a transparent member (15) and a second captured image obtained by a second camera (2) capturing the subject (13) through the transparent member (15) with the modified first correction parameter stored in the storage unit (24); and
a calculating unit (25) that calculates disparity from an image of the subject (13) included in the corrected first captured image and the image of the subject (13) included in the corrected second captured image.

5. The disparity calculating device (20) according to claim 4, wherein
the storage unit (24) stores therein the modified first correction parameter varying with each setting of a lens in the first camera (1), and
the correcting unit (22, 23) corrects the first captured image obtained by capturing performed in first setting included in the setting of the lens in the first camera (1) and the second captured image obtained by capturing performed in second setting included in setting of a lens in the second camera (2) with the correction parameter corresponding to the first setting and the second setting.

6. The disparity calculating device (20) according to claim 4 or 5, wherein the transparent member (15) is a windshield (15) of a vehicle.

7. A stereo camera (30) comprising:
a first camera (1) that captures a subject (13) through a transparent member (15) to obtain a first captured image;
a second camera (2) that captures the subject (13) through the transparent member (15) to obtain a second captured image; and
the disparity calculating device according to anyone of claims 4 to 6.

## Patentansprüche

1. Stereokamerakalibrierungsverfahren zum Kalibrieren einer Stereokamera (30), die eine erste Kamera (1) und eine zweite Kamera (2) enthält und die ein Objekt (13) durch ein lichtdurchlässiges Element (15) aufnimmt, wobei das Stereokamerakalibrierungsverfahren (30) umfasst:
Ableiten eines ersten Korrekturparameters und eines zweiten Korrekturparameters, die verwendet werden, um eine absolute Positionsabweichung, die eine Abweichung der Koordinaten eines Bildes des Objekts (13) aufgrund des lichtdurchlässigen Elements (15), in einem Bild, das durch die erste Kamera (1) erhalten wird, und einem Bild, das durch die zweite Kamera (2) erhalten wird, angibt, zu kalibrieren;
Aufnehmen eines Kalibrierungswerkzeugs (60), um ein erstes aufgenommenes Bild mit der ersten Kamera (1) und ein zweites aufgenommenes Bild mit der zweiten Kamera (2) zu erhalten, und Ableiten eines dritten Korrekturparameters, der verwendet wird, um eine relative Positionsabweichung, die eine Abweichung der Disparität zwischen dem Bild des Objekts (13) in einem kalibrierten ersten aufgenommenen Bild und dem Bild des Objekts (13) in einem kalibrierten zweiten aufgenommenen Bild angibt, anhand eines Unterschieds zwischen den Koordinaten des Bildes des Objekts in dem kalibrierten ersten aufgenommenen Bild und den Koordinaten des Bildes des Objekts in dem kalibrierten zweiten aufgenommenen Bild und einer idealen Disparität, die einem Abstand von der Stereokamera (30) zu dem Kalibrierungswerkzeug (60) entspricht, zu kalibrieren;
Ändern des ersten Korrekturparameters und/oder des zweiten Korrekturparameters mit dem dritten Korrekturparameter.

2. Stereokamerakalibrierungsverfahren nach Anspruch 1, wobei
beim Ableiten des ersten Korrekturparameters, der verwendet wird, um die absolute Positionsabweichung zu kalibrieren, der erste Korrekturparameter, der verwendet wird, um die absolute Positionsabweichung in dem durch die erste Kamera (1) erhaltenen Bild und/oder in dem durch die zweite Kamera (2) erhaltenen Bild zu korrigieren, durch Ausführen einer optischen Simulation anhand von Eigenschaften einer Linse in der ersten Kamera (1) und/oder Eigenschaften einer Linse in der zweiten Kamera (2) und von Eigenschaften des lichtdurchlässigen Elements abgeleitet wird.

3. Stereokamerakalibrierungsverfahren nach Anspruch 1, das umfasst:
Speichern in der Stereokamera (30) des dritten Korrekturparameters unabhängig von dem ersten Korrekturparameter und dem zweiten Korrekturparameter.

4. Disparitätsberechnungsvorrichtung (20), die umfasst:
eine Speichereinheit (24), die einen ersten Korrekturparameter, der verwendet wird, um eine absolute Positionsabweichung zu korrigieren, und einen geänderten ersten Korrekturparameter, der unter Verwendung des Verfahrens nach einem der Ansprüche 1 bis 2 abgeleitet wird, speichert;
eine Korrektureinheit (22, 23), die ein durch eine erste Kamera (1), die ein Objekt (13) durch ein lichtdurchlässiges Element (15) aufnimmt, erhaltenes erstes aufgenommenes Bild und ein durch einen zweite Kamera (2), die das Objekt (13) durch das lichtdurchlässige Element (15) aufnimmt, erhaltenes zweites aufgenommenes Bild mit dem in der Speichereinheit (24) gespeicherten geänderten ersten Korrekturparameter korrigiert; und
eine Berechnungseinheit (25), die eine Disparität von einem Bild des Objekts (13), das in dem korrigierten ersten aufgenommenen Bild enthalten ist, und dem Bild des Objekts (13), das in dem korrigierten zweiten aufgenommenen Bild enthalten ist, berechnet.

5. Disparitätsberechnungsvorrichtung (20) nach Anspruch 4, wobei
die Speichereinheit (24) in ihr den geänderten ersten Korrekturparameter, der mit jeder Einstellung einer Linse in der ersten Kamera (1) variiert, speichert, und
die Korrektureinheit (22, 23) das erste aufgenommene Bild, das durch ein Aufnehmen, das in der ersten Einstellung, die in der Einstellung der Linse in der ersten Kamera (1) enthalten ist, ausgeführt wird, erhalten wird, und das zweite aufgenommene Bild, das durch ein Aufnehmen, das in der zweiten Einstellung, die in der Einstellung einer Linse in der zweiten Kamera (2) enthalten ist, ausgeführt wird, erhalten wird, mit dem Korrekturparameter, der der ersten Einstellung und der zweiten Einstellung entspricht, korrigiert.

6. Disparitätsberechnungsvorrichtung (20) nach Anspruch 4 oder 5, wobei das lichtdurchlässige Element (15) eine Windschutzscheibe eines Fahrzeugs ist.

7. Stereokamera (30), die umfasst:
eine erste Kamera (1), die ein Objekt (13) durch ein lichtdurchlässiges Element (15) aufnimmt, um ein erstes aufgenommenes Bild zu erhalten;
eine zweite Kamera (2), die das Objekt (13) durch das lichtdurchlässige Element (15) aufnimmt, um ein zweites aufgenommenes Bild zu erhalten; und
die Disparitätsberechnungsvorrichtung nach einem der Ansprüche 4 bis 6.

## Revendications

1. Procédé d'étalonnage de caméra stéréo permettant d'étalonner une caméra stéréo (30) comprenant une première caméra (1) et une deuxième caméra (2) et qui capture un sujet (13) à travers un élément transparent (15), le procédé d'étalonnage de la caméra stéréo (30) comprenant :
la dérivée d'un premier paramètre de correction et d'un deuxième paramètre de correction utilisés pour étalonner un écart positionnel absolu indiquant un écart de coordonnées d'une image du sujet (13) dû à l'élément transparent (15) dans chacune d'une image obtenue par la première caméra (1) et d'une image obtenue par la deuxième caméra (2) ;
la capture d'un outil d'étalonnage (60) pour obtenir une première image capturée avec la première caméra (1) et une deuxième image capturée avec la deuxième caméra (2) et la dérivée d'un troisième paramètre de correction utilisé pour étalonner un écart positionnel relatif indiquant un écart de disparité entre l'image du sujet (13) dans une première image capturée étalonnée et l'image du sujet (13) dans une deuxième image capturée étalonnée sur la base d'une différence entre les coordonnées de l'image du sujet dans la première image capturée étalonnée et les coordonnées de l'image du sujet dans la deuxième image capturée étalonnée et sur une disparité idéale correspondant à une distance entre la caméra stéréo (30) et l'outil d'étalonnage (60) ;
la modification d'au moins l'un du premier paramètre de correction et du deuxième paramètre de correction avec le troisième paramètre de correction.

2. Procédé d'étalonnage de caméra stéréo selon la revendication 1, dans lequel,
à la dérivée du premier paramètre de correction utilisé pour étalonner l'écart positionnel absolu, le premier paramètre de correction utilisé pour étalonner l'écart positionnel absolu dans au moins l'une de l'image obtenue par la première caméra (1) et de l'image obtenue par la deuxième caméra (2) est dérivé par l'exécution d'une simulation optique sur la base d'au moins l'une de caractéristiques d'une lentille dans la première caméra (1) et de caractéristiques d'une lentille dans la deuxième caméra (2) et sur des caractéristiques de l'élément transparent.

3. Procédé d'étalonnage de caméra stéréo selon la revendication 1, comprenant :
le stockage, dans la caméra stéréo (30), du troisième paramètre de correction indépendamment du premier paramètre de correction et du deuxième paramètre de correction.

4. Dispositif de calcul de disparité (20) comprenant :
une unité de stockage (24) qui stocke dans celle-ci un premier paramètre de correction utilisé pour étalonner un écart positionnel absolu et un premier paramètre de correction modifié qui a été dérivé à l'aide du procédé selon l'une quelconque des revendications 1 et 2 ;
une unité de correction (22, 23) qui corrige au moins l'une d'une première image capturée obtenue par une première caméra (1) capturant un sujet (13) à travers un élément transparent (15) et d'une deuxième image capturée obtenue par une deuxième caméra (2) capturant le sujet (13) à travers l'élément transparent (15) avec le premier paramètre de correction modifié stocké dans l'unité de stockage (24) ; et
une unité de calcul (25) qui calcule une disparité entre une image du sujet (13) incluse dans la première image capturée corrigée et l'image du sujet (13) incluse dans la deuxième image capturée corrigée.

5. Dispositif de calcul de disparité (20) selon la revendication 4, dans lequel l'unité de stockage (24) stocke dans celle-ci le premier paramètre de correction modifié qui varie avec chaque réglage d'une lentille dans la première caméra (1), et
l'unité de correction (22, 23) corrige la première image capturée obtenue par la capture effectuée dans le premier réglage inclus dans le réglage de la lentille dans la première caméra (1) et la deuxième image capturée obtenue par la capture effectuée dans le deuxième réglage inclus dans le réglage d'une lentille dans la deuxième caméra (2) avec le paramètre de correction correspondant au premier réglage et au deuxième réglage.

6. Dispositif de calcul de disparité (20) selon la revendication 4 ou 5, dans lequel l'élément transparent (15) est un pare-brise (15) d'un véhicule.

7. Caméra stéréo (30) comprenant :
une première caméra (1) qui capture un sujet (13) à travers un élément transparent (15) pour obtenir une première image capturée ;
une deuxième caméra (2) qui capture le sujet (13) à travers l'élément transparent (15) pour obtenir une deuxième image capturée ; et
le dispositif de calcul de disparité selon l'une quelconque des revendications 4 à 6.
